# EUROPÄISCHE PATENTANMELDUNG

(11) **EP 2 260 987 A1**
(43) Veröffentlichungstag der Anmeldung: **15.12.2010**
(21) Anmeldenummer: 10005556.5
(22) Anmeldetag: 28.05.2010
(51) Int. Cl.: B27G 19/02, B23D 59/00

(54) **Tischkreissäge mit einer Spanhaube**

(30) Priorität: 09.06.2009 DE 202009008202 U
(71) Anmelder: Metabowerke GmbH, 72622 Nürtingen (DE)
(72) Erfinder: Evers, Jürgen, 48480 Spelle (DE); Schulze, Jan, 49624 Löningen (DE)
(74) Vertreter: Lorenz, Markus

(57) **Zusammenfassung**

Gegenstand der Erfindung ist eine Tischkreissäge mit einem Kreissägeblatt und einer Spanhaube. Die Spanhaube (10) hat eine der Rückseite des Kreissägeblatts (5) zugeordnete Rückseite und eine der gegenüberliegenden Vorderseite des Kreissägeblatts (5) zugeordnete Vorderseite. Die Erfindung zeichnet sich dadurch aus, dass die Spanhaube (10) an oder in der Nähe der Vorderseite eine Eintauchkontur (15) aufweist, die auf einen Sägeschlitz (6) oder eine Ausnehmung in der Tischplatte (2) ausgerichtet ist, deren Breite geringer ist als die Breite eines Sägeschlitzes (6) bzw. der Ausnehmung in der Tischplatte (2), und dass die Spanhaube (10) um die Haubenschwenkachse (13) so weit nach unten schwenkbar ist, dass die Eintauchkontur (15) ein wenig in einen Sägeschlitz (6) bzw. in eine Ausnehmung eintaucht. Gegenstand der Erfindung ist auch eine Spanhaube als solche.

## Beschreibung

Die Erfindung betrifft eine Tischkreissäge mit den Merkmalen des Oberbegriffs von Anspruch 1.

Eine Tischkreissäge im Sinne der Lehre dieser Erfindung ist eine Kreissägemaschine, bei der das Kreissägeblatt eine die Werkstückauflagefläche bildende Tischplatte oder eine Einlage in einer solchen Tischplatte von unten her in einem Sägeschlitz durchsetzt. Tischkreissägen der in Rede stehenden Art sind als Tischkreissägen, Präzisionskreissägen, Formatkreissägen, Baukreissägen oder Kapp-, Gehrungs- und Tischkreissägen, schließlich auch als Kappsägen mit Obertisch bekannt. Für alle diese Arten von Kreissägen gilt die Lehre der vorliegenden Erfindung.

Dem Kreissägeblatt einer Tischkreissäge ist zunächst regelmäßig ein auf der Rückseite des Kreissägeblattes, also von der Bedienerseite abgewandt, angeordneter Spaltkeil zugeordnet. Dieser ist abschnittsweise der Außenkontur des Kreissägeblattes angepasst und kann mittels einer entsprechenden Halterung in der Ebene des Kreissägeblattes relativ zum Kreissägeblatt verstellt werden.

Um ein Berühren des Kreissägeblattes von oben her zu verhindern und beim Sägen vom Kreissägeblatt abgeschleuderte Sägespäne aufzufangen ist an einer Tischkreissäge regelmäßig ferner eine das Kreissägeblatt von oben her überfassende Spanhaube vorgesehen, die den Zahnkranz des Kreissägeblattes abschirmt. Regelmäßig ist eine solche Spanhaube mittels einer Haubenschwenkachse an dem Spaltkeil schwenkbar angebracht.

Bei der bekannten Tischkreissäge, von der die Erfindung ausgeht (DE-U-20 2006 008 586) ist die Ruhestellung der Spanhaube mittels eines Schwenkanschlags am Spaltkeil begrenzt. Die Spanhaube kann also nur bis in eine bestimmte tiefste Stellung gegenüber der Tischplatte bzw. einer Einlage in der Tischplatte heruntergeschwenkt werden. Ein geringer Spalt verbleibt zwischen einer Anlaufschräge an der Vorderseite der Spanhaube und der Werkstückauflagefläche. Wird ein Werkstück in Längsrichtung von der Vorderseite her an das Kreissägeblatt herangeschoben, so kann das Werkstück vermittels der Anlaufschräge die Spanhaube selbsttätig anheben. Die Spanhaube liegt dann auf der Oberseite des Werkstückes auf und gleitet auf dieser. Dadurch ist das Kreissägeblatt beim Sägen optimal gegen Berührung durch die Hand einer Bedienungsperson geschützt. Zu diesem Zwecke findet man im übrigen auch an der Anlaufschräge einer Spanhaube manchmal eine Anlaufrolle o. dgl.

Grundsätzlich sind auch Spanhauben bekannt, die nicht am Spaltkeil der Tischkreissäge angebracht sind, sondern auf andere Weise, beispielsweise an einem oberhalb der Tischplatte befindlichen Gestänge, geführt werden. Auch das fällt in den Rahmen der Lehre der vorliegenden Erfindung. Bei derartigen Spanhauben ist manchmal auch der Spaltkeil nicht unmittelbar an der Tischkreissäge, sondern an der Spanhaube oder dem diese tragenden Gestänge angebracht. Auch das fällt in den Rahmen der Lehre der vorliegenden Erfindung.

Spanhauben der in Rede stehenden Art sind meistens aus Kunststoff hergestellt, damit sie bei einem Kontakt mit dem Zahnkranz des Kreissägeblattes möglichst nicht splittern oder mit dem Kreissägeblatt verklemmen. Generell ist es aber angestrebt, dass möglichst jeder Kontakt der Spanhaube mit dem Kreissägeblatt vermieden wird. Dazu ist es erforderlich, die Spanhaube auf die Ebene des Kreissägeblattes genau auszurichten. Bei einer Seitenbelastung der Spanhaube kann es aber trotzdem passieren, dass sie mit dem Kreissägeblatt kollidiert. Diesem Problem ist man im Stand der Technik insbesondere durch eine präzisere Führung des Spaltkeils, eine verwindungssteifere Ausgestaltung des Spaltkeils und eine verwindungssteifere Ausführung der Spanhaube zu Leibe gerückt.

Der Erfindung liegt das Problem zugrunde, die Seitenstabilität der Spanhaube weiter zu verbessern.

Die zuvor aufgezeigte Problemstellung ist bei der Tischkreissäge gemäß den Merkmalen des Oberbegriffs von Anspruch 1 durch die Merkmale des kennzeichnenden Teils von Anspruch 1 gelöst.

Erfindungsgemäß wird die Spanhaube mittels der Eintauchkontur an ihrer Vorderseite im Sägeschlitz oder einer eventuell zusätzlich vorhandenen Ausnehmung in der Tischplatte in tiefster Schwenkstellung seitlich ausgerichtet. In dieser Stellung hat die Spanhaube eine wesentlich höhere Seitenstabilität, jeder Kontakt der Spanhaube mit dem Kreissägeblatt auch bei starker seitlicher Belastung wird verhindert. Achtet der Benutzer darauf, dass die Spanhaube nach Abschalten des Sägeaggregates wieder in die tiefste Schwenkstellung gelangt, so stellt er unverzüglich fest, wenn sich die Spanhaube oder deren Aufhängung, insbesondere der Spaltkeil verzogen haben sollte. Er kann dann sofort Gegenmaßnahmen treffen, also die Spanhaube wieder fachgerecht und optimal ausrichten.

Bevorzugte Ausgestaltungen und Weiterbildungen der zuvor beschriebenen Erfindung sind Gegenstand der auf die Tischkreissäge bezogenen Unteransprüche.

Gegenstand der Erfindung ist auch eine entsprechend mit einer Eintauchkontur versehene Spanhaube für sich, die selbst handelsfähiges Ersatzteil und Zubehörteil von Tischkreissägen der in Rede stehenden Art ist.

Im folgenden wird die Erfindung nun anhand einer lediglich ein bevorzugtes Ausführungsbeispiel darstellenden Zeichnung näher erläutert. In der Zeichnung zeigt
- Fig. 1: in einer perspektivischen Darstellung, jedoch viele für die Erfin- dung nicht relevante Teile weggelassen, ein bevorzugtes Ausfüh- rungsbeispiel einer Tischkreissäge,
- Fig. 2: das in Fig. 1 markierte Detail in vergrößerter Darstellung,
- Fig. 3: eine Seitenansicht der Tischkreissäge aus Fig. 1 und
- Fig. 4: das in Fig. 3 markierte Detail der Tischkreissäge im Bereich der Spanhaube.

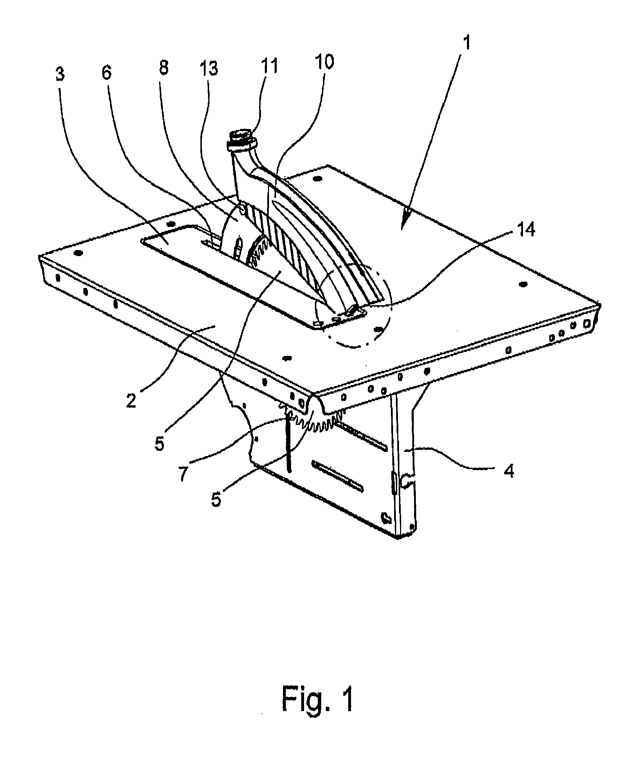

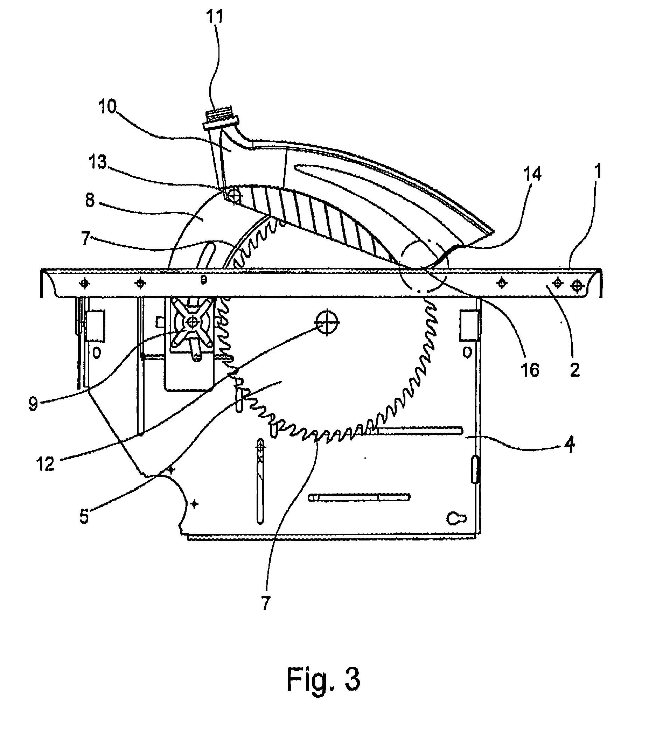

Fig. 1 in einer Perspektive, Fig. 3 in einer Seitenansicht zeigt in Prinzipdarstellung eine Tischkreissäge. Regelmäßig hat eine solche Tischkreissäge ein offenes oder geschlossenes Außengehäuse. Dieses ist in Fig. 1 und 3 nicht dargestellt. Dazu darf aber auf den eingangs erläuterten Stand der Technik verwiesen werden.

Dargestellt ist, dass die Tischkreissäge eine Werkstückauflagefläche 1 aufweist, die von einer Tischplatte 2 gebildet ist. Diese Tischplatte 2 ist hier mehrteilig ausgeführt, weist nämlich eine Einlage 3 auf. Das ist eine häufige Konstruktionsweise von Tischkreissägen.

Unter der Tischplatte 2 ist ein Sägeaggregat 4 angeordnet, das hier durch den entsprechenden Staubauffangkasten angedeutet ist. Insbesondere gezeigt ist ein Kreissägeblatt 5 des Sägeaggregats 4, das die Tischplatte 2, hier genauer gesagt die Einlage 3 in der Tischplatte 2, von unten her in einem Sägeschlitz 6 durchsetzt. Je nach Höheneinstellung des gegebenenfalls höheneinstellbar ausgeführten Kreissägeblattes 5 ragt also ein mehr oder weniger großer Teil des Zahnkranzes 7 des Kreissägeblattes 5 nach oben über die Werkstückauflagefläche 1 hinaus. Der Sägeschlitz 6 definiert dabei die Längsrichtung der Tischkreissäge.

Regelmäßig ist einem Kreissägeblatt 5 einer Tischkreissäge der in Rede stehenden Art ein Spaltkeil 8 zugeordnet. Im dargestellten und bevorzugten Ausführungsbeispiel durchsetzt auch der Spaltkeil 8 den Sägeschlitz 6 von unten her. Er ist abschnittsweise der Außenkontur des Kreissägeblattes 5 angepasst und befindet sich, von der Bedienerseite aus gesehen, die in Fig. 1 und 3 rechts zu finden ist, auf der Rückseite des Kreissägeblattes 5. Der Spaltkeil 8 ist hier mit einer zweiachsigen Verstellhalterung 9 am Sägeaggregat 4 unterhalb der Tischplatte 2 verstellbar angebracht. Er erstreckt sich insgesamt in der vom Kreissägeblatt 5 gebildeten Ebene, sofern er richtig eingestellt ist. Grundsätzlich ist es aber auch möglich, dass der Spaltkeil 8 an einer anderen Halterung angebracht, beispielsweise oberhalb der Tischplatte 2 gelagert ist.

Zum Schutz des Zahnkranzes 7 des Kreissägeblattes 5 oberhalb der Werkstückauflagefläche 1 dient ferner eine das Kreissägeblatt 5 von oben her überfassende, den Zahnkranz 7 des Kreissägeblattes 5 abschirmende Spanhaube 10. Diese besteht zumeist aus Kunststoff und ist häufig in einer Kontrastfarbe, beispielsweise gelb, eingefärbt. An einer Spanhaube 10 ist auch häufig, so auch hier, ein Anschlussstutzen 11 für eine Späneabsaugeinrichtung angeordnet.

Im dargestellten und bevorzugten Ausführungsbeispiel ist die Spanhaube 10 gegenüber dem Kreissägeblatt 5 um eine zur Rotationsachse 12 des Kreissägeblattes 5 parallele, aber von ihr beabstandete, oberhalb der Tischplatte 2 liegende Haubenschwenkachse 13 schwenkbar. Die Spanhaube 10 kann also aus einer liefsten Schwenkposition nahe der Tischplatte 2 hochgeschwenkt werden, um so das Kreissägeblatt 5 von oben her zugänglich werden zu lassen.

Die Spanhaube 10 hat eine der Rückseite des Kreissägeblattes 5 zugeordnete Rückseite und eine der gegenüberliegenden Vorderseite des Kreissägeblattes 5 zugeordnete Vorderseite. An der Vorderseite der Spanhaube 10 befindet sich eine Anlaufschräge 14, mittels derer die Spanhaube 10 beim Heranschieben eines Werkstücks auf der Werkstückauflagefläche 1 in Längsrichtung angehoben werden kann. Die Spanhaube 10 liegt dann bei weiterem Vorschieben des Werkstücks auf dem Werkstück von oben her auf und schützt beim Sägen des Werkstücks den Benutzer so weit wie möglich.

In Fig. 1 und 3 sieht man die Spanhaube 10 in ihrer tiefsten Schwenkstellung. Ein Werkstück befindet sich nicht auf der Werkstückauflagefläche 1.

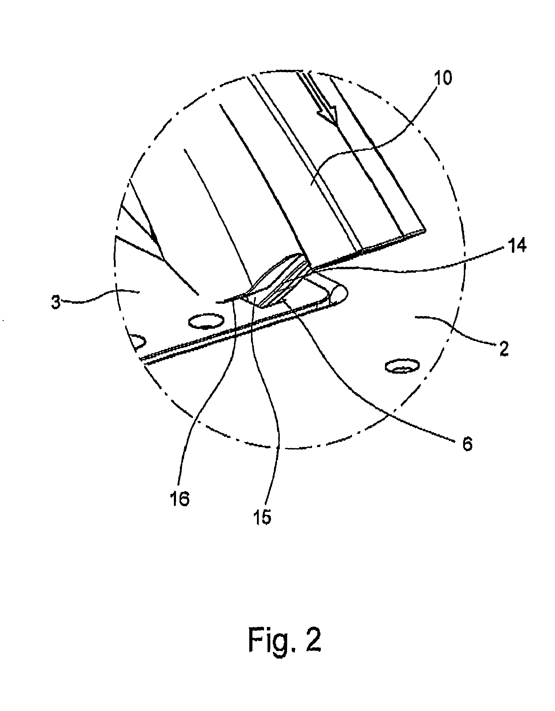

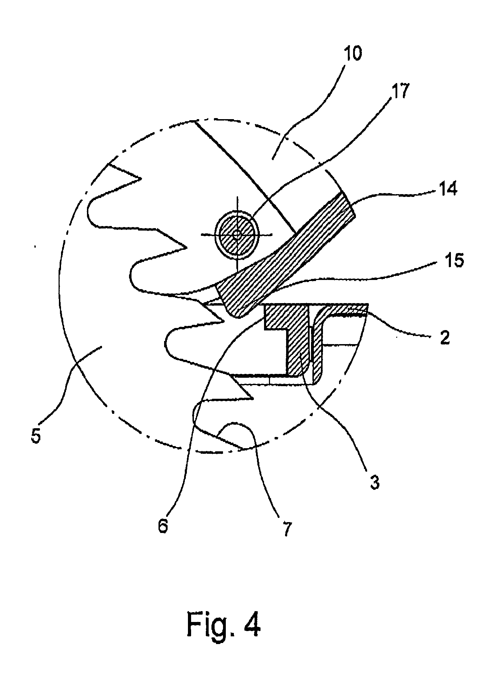

Wie sich aus Fig. 1 bis 4 im Zusammenhang gut entnehmen läßt und wie beispielsweise Fig. 2 besonders deutlich zeigt, weist die Spanhaube 10 der erfindungsgemäßen Tischkreissäge an der Vorderseite eine Eintauchkontur 15 auf, die hier auf den Sägeschlitz 6 in der Einlage 3 der Tischplatte 2 ausgerichtet ist. Sie könnte auch auf eine zusätzliche, ergänzende Ausnehmung in der Tischplatte 2 oder der Einlage 3, wenn eine solche vorhanden wäre, ausgerichtet sein. Dann könnte sie auch etwas beabstandet von der Vorderseite angeordnet sein. Die Breite der Eintauchkontur 15, die hier als eine Art Eintauchnase ausgeführt ist, ist geringer als die Breite des Sägeschlitzes 6 (bzw. der Ausnehmung). Das dargestellte Ausführungsbeispiel zeigt, dass die Spanhaube 10 um die Haubenschwenkachse 13 so weit nach unten geschwenkt werden kann, dass die Eintauchkontur 15 ein wenig in den Sägeschlitz 6 (oder die Ausnehmung) eintaucht. Das sieht man besonders gut in Fig. 2 und in Fig. 4.

Dadurch, dass die Spanhaube 10 mit der Eintauchkontur 15 in den Sägeschlitz 6 eintaucht, ist sie an der von der Haubenschwenkachse 13 entfernten Vorderseite auch seitlich festgelegt und auf den Sägeschlitz 6 ausgerichtet. Die Seitenstabilität der Spanhaube 10 ist stark verbessert, ein Sägeblattkontakt wird auch bei seitlicher Belastung der Spanhaube 10 kaum auftreten können.

Außerdem merkt ein Benutzer mit dieser Konstruktion sofort, wenn sich die Spanhaube 10 oder die Anbringung der Spanhaube 10 irgendwie verzogen haben sollte. Dann trifft die Eintauchkontur 15 nicht mehr genau auf den Sägeschlitz 6 bzw. die Ausnehmung, das gewohnte geringfügige Eintauchen der Eintauchkonfur 15 in den Sägeschlitz 6 wird unmöglich. Der Benutzer kann Gegenmaßnahmen ergreifen, also die Spanhaube 10 wieder richtig ausrichten, den Spaltkeil 8 oder die sonstige Aufhängung der Spanhaube 10 ausrichten oder reparieren oder auch die Spanhaube 10 auswechseln.

Das dargestellte Ausführungsbeispiel zeigt ferner eine konstruktive Maßnahme, um ein unbeabsichtigtes Berühren der Eintauchkontur 15 und des Zahnkranzes 7 des Kreissägeblattes 5 zu verhindern. Dazu ist hier vorgesehen, dass an der Spanhaube 10 oberhalb der Eintauchkontur 15 ein Eintauchanschlag 16, insbesondere in Form einer Verbreiterung mit größerer Breite als der Sägeschlitz 6 bzw. die Ausnehmung angeordnet ist, durch den die Eintauchtiefe der Eintauchkontur 15 begrenzt ist. Im dargestellten und bevorzugten Ausführungsbeispiel ist die Eintauchkontur 15 in die Spanhaube fest integriert. Sie kann aber auch an einem gesonderten Einsatzteil angebracht werden, das mittels einer Halterung 17 an der Spanhaube 10 angebracht ist.

Fig. 4 kann man ferner entnehmen, dass im dargestellten Ausführungsbeispiel die Eintauchkontur 15 Teil der Anlaufschräge 14 der Spanhaube 10 ist.

Schließlich ist hier vorgesehen, wie bereits eingangs erläutert, dass in diesem Ausführungsbeispiel die Spanhaube 10 mittels der Haubenschwenkachse 13 am Spaltkeil 8 schwenkbar angebracht ist. Wie aber auch bereits vorher festgestellt worden ist, kann die Spanhaube 10 auch mittels einer anderen Aufhängung angebracht sein, die vom Spaltkeil 8 unabhängig ist.

## Patentansprüche

1. Tischkreissäge
mit einem offenen oder geschlossenen Außengehäuse mit einer eine Werkstückauflagefläche (1) bildenden, einteiligen oder mehrteiligen Tischplatte (2), mit einem unter der Tischplatte (2) angeordneten Sägeaggregat (4) mit einem Kreissägeblatt (5), das die Tischplatte (2) oder eine Einlage (3) in der Tischplatte (2) von unten her in einem Sägeschlitz (6) durchsetzt, der mit seiner Erstreckung die Längsrichtung der Tischkreissäge definiert,
vorzugsweise mit einem, vorzugsweise den Sägeschlitz (6) ebenfalls von unten her durchsetzenden, abschnittsweise der Außenkontur des Kreissägeblattes (5) angepassten Spaltkeil (8) auf der Rückseite des Kreissägeblattes (5) und
mit einer das Kreissägeblatt (5) von oben her überfassenden, den Zahnkranz (7) des Kreissägeblattes (5) abschirmenden Spanhaube (10),
wobei die Spanhaube (10) gegenüber dem Kreissägeblatt (5) um eine zur Rotationsachse (12) des Kreissägeblattes (5) parallele, aber von ihr beabstandete, vorzugsweise oberhalb der Tischplatte (2) liegende Haubenschwenkachse (13) schwenkbar ist und
wobei die Spanhaube (10) eine der Rückseite des Kreissägeblattes (5) zugeordnete Rückseite und eine der gegenüberliegenden Vorderseite des Kreissägeblattes (5) zugeordnete Vorderseite aufweist und an der Vorderseite vorzugsweise eine Anlaufschräge (14) aufweist, mittels derer die Spanhaube (10) beim Heranschieben eines Werkstückes in Längsrichtung angehoben werden kann, **dadurch gekennzeichnet,**
**dass** die Spanhaube (10) an oder in der Nähe der Vorderseite eine Eintauchkontur (15) aufweist, die auf den Sägeschlitz (6) oder eine Ausnehmung in der Tischplatte (2) ausgerichtet ist, deren Breite geringer ist als die Breite des Sägeschlitzes (6) bzw. der Ausnehmung in der Tischplatte (2), und
**dass** die Spanhaube (10) um die Haubenschwenkachse (13) so weit nach unten schwenkbar ist, dass die Eintauchkontur (15) ein wenig in den Sägeschlitz (6) bzw. in die Ausnehmung eintaucht.

2. Tischkreissäge nach Anspruch 1, **dadurch gekennzeichnet,**
**dass** an der Spanhaube (10) oberhalb der Eintauchkontur (15) ein Eintauchanschlag (16), insbesondere in Form einer Verbreiterung mit größerer Breite als der Sägeschlitz (6) bzw. die Ausnehmung angeordnet ist, durch den die Eintauchtiefe der Eintauchkontur (15) begrenzt ist.

3. Tischkreissäge nach Anspruch 1 oder 2, **dadurch gekennzeichnet,**
**dass** die Eintauchkontur (15) Teil der Anlaufschräge (14) ist.

4. Tischkreissäge nach einem der Ansprüche 1 bis 3, **dadurch gekennzeichnet, dass** die Spanhaube (10) mittels der Haubenschwenkachse (13) an dem Spaltkeil (8) schwenkbar angebracht ist

5. Spanhaube für eine Tischkreissäge,
die eine einer Rückseite eines Kreissägeblattes (5) zuzuordnende Rückseite und eine einer gegenüberliegenden Vorderseite des Kreissägeblattes (5) zuzuordnende Vorderseite aufweist und an der Vorderseite vorzugsweise eine Anlaufschräge (14) aufweist, mittels derer die montierte Spanhaube (10) beim Heranschieben eines Werkstückes durch das Werkstück anhebbar ist,
**dadurch gekennzeichnet,**
**dass** die Spanhaube (10) an oder in der Nähe der Vorderseite eine Eintauchkontur (15) ausweist, deren Breite geringer ist als die Breite eines Sägeschlitzes (6) bzw. einer zugeordneten Ausnehmung in einer Tischplatte (2) einer zugeordneten Tischkreissäge.

6. Spanhaube für eine Tischkreissäge nach Anspruch 5, **dadurch gekennzeichnet,**
**dass** an der Spanhaube (10) oberhalb der Eintauchkontur (15) ein Eintauchanschlag (16), insbesondere in Form einer Verbreiterung mit größerer Breite als der Sägeschlitz (6) bzw. die Ausnehmung einer zugeordneten Tischkreissäge, durch den die Eintauchtiefe der Eintauchkontur (15) begrenzbar ist.

7. Spanhaube für eine Tischkreissäge nach Anspruch 5 oder 6, **dadurch gekennzeichnet,**
**dass** die Eintauchkontur (15) Teil der Anlaufschräge (14) ist,
